# EUROPEAN PATENT APPLICATION

(11) **EP 3 605 412 A1**
(43) Date of publication of application: **05.02.2020**
(21) Application number: 18186301.0
(22) Date of filing: 30.07.2018
(51) Int. Cl.: G06Q 10/00, G06Q 10/06

(54) **SYSTEM AND METHOD FOR MANAGING A FLEET OF VEHICLES**

(71) Applicant: Bayerische Motoren Werke Aktiengesellschaft, 80809 München (DE)
(72) Inventor: Kümmel, Dr. Michal, 81369 München (DE); Weikl, Dr. Simone, 80469 München (DE); Forster, Nathan, Portland 97209 (US)

(57) **Abstract**

The present disclosure provides a system for managing a fleet of vehicles. The system includes identification means configured to identify a condition of a vehicle of the fleet based on condition data received from the vehicle;extemal managing means configured to determine whether the identified condition meets at least one rule included in a rule database; and notification means configured to provide a task notification if the at least one identified condition meets the at least one rule.

## Description

### FIELD

Embodiments of the present disclosure relate to a system for managing a fleet of vehicles, a method for managing a fleet of vehicles, and a computer-readable storage medium. Embodiments of the present disclosure particularly relates to faster, more efficient and accurate monitoring and maintenance of vehicles, and in particular automobiles or cars.

### BACKGROUND

The use of car-sharing services has increased significantly in recent years. In contrast to car rental, where a vehicle is rented and returned at a designated location, car-sharing services allow the use of freely parked vehicles in the city area. The vehicle's condition must be constantly monitored to ensure the proper functioning of the vehicles and to guarantee a safety of the passengers. Because the vehicles are freely parked, monitoring the vehicles' condition, maintaining the vehicles and fixing problems can be cumbersome and typically requires a lot of manual manpower and actions.

In view of the above, new systems for managing a fleet of vehicles, methods for managing a fleet of vehicles, and computer-readable storage media, that overcome at least some of the problems in the art are beneficial.

### SUMMARY

In light of the above, the present disclosure provides a system for managing a fleet of vehicles and a method for managing a fleet of vehicles with faster, more efficient and accurate monitoring and maintenance of the vehicles. The systems and methods reduce the number, extent, and/or nature of the inputs or manual actions from a human and provide a more efficient human-machine interface. Further aspects, benefits, and features of the present disclosure are apparent from the claims, the description, and the accompanying drawings.

According to an aspect of the present disclosure, a system for managing a fleet of vehicles, such as automobiles or cars, is provided. The system includes identification means configured to identify a condition of a vehicle of the fleet based on condition data received from the vehicle; external managing means configured to determine whether the identified condition meets at least one rule included in a rule database; and notification means. The notification means is configured to provide a task notification if the at least one identified condition meets the at least one rule.

According to a further of the present disclosure, a system for managing a fleet of vehicles is provided. The system includes an identification device configured to identify a condition of a vehicle of the fleet based on condition data received from the vehicle. The identification device is included in a backend. The system further includes an external managing unit, such as the backend, configured to determine whether the identified condition meets at least one rule included in a rule database. The external managing unit includes a notification device configured to automatically provide a task notification to an external entity, such as a service provider, if the at least one identified condition meets the at least one rule.

According to another aspect of the present disclosure, a method for managing a fleet of vehicles is provided. The method includes identifying, at external managing means, a condition of a vehicle of the fleet based on condition data received from the vehicle; determining, by the external managing means, whether the identified condition meets at least one rule included in a rule database; and providing, by the external managing means, a task notification if the at least one identified condition meets the at least one rule.

According to yet another aspect of the present disclosure, a computer-readable storage medium is provided. The computer-readable storage medium includes one or more programs for execution by one or more processors of a system, the one or more programs including instructions which, when executed by the one or more processors, cause the system to perform, at least in part, the method for managing a fleet of vehicles according to the present disclosure.

Embodiments are also directed at devices for carrying out the disclosed methods and include device parts for performing each described method aspect. These method aspects may be performed by way of hardware components, a computer programmed by appropriate software, by any combination of the two or in any other manner. Furthermore, embodiments according to the disclosure are also directed at methods for operating the described system. It includes method aspects for carrying out every function of the system.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a schematic view of a system for managing a fleet of vehicles according to embodiments described herein;
- FIG. 2: shows a flow chart of a method for managing a fleet of vehicles according to embodiments described herein; and
- FIG. 3: illustrates a process of a method for managing a fleet of vehicles according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

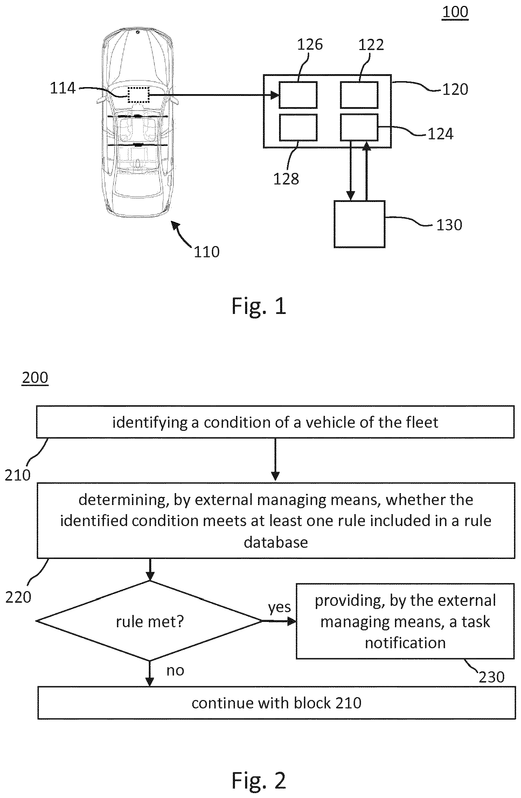

FIG. 1 shows a schematic view of a system 100 for managing a fleet of vehicles according to embodiments described herein. The term "fleet" may refer to a group of vehicles made available to customers by an organization.

The system 100 includes identification means 128 configured to identify a condition of a vehicle 110 of the fleet, external managing means 120 configured to determine whether the identified condition meets at least one rule included in a rule database 122, and notification means 124. The notification means 124 is configured to provide a task notification if the at least one identified condition meets the at least one rule. The identification means 128 can be included in the external managing means 120.

The external managing means 120 may be provided at a location remote from the vehicle 110. For example, the external managing means 120 may be provided at a service or managing center of the operator of the fleet. Specifically, the external managing means 120 can be provided as (or at) a backend of an operator of the fleet. The external managing means 120 can include one or more processors and a computer-readable storage medium comprising one or more programs or software for execution by the one or more processors to perform the system's tasks.

The external managing means 120, and in particular the identification means 128, can receive condition data from the vehicle 100, such as data indicating a tire pressure, a fuel level, and/or a state of charge of a battery. The vehicle 100 can send the condition data to the external managing means 120, and in particular the identification means 128, at regular intervals. The external managing means 120, and in particular the identification means 128, can use the condition data to derive or identify the condition of the vehicle 110, such as a tire pressure, a fuel level, and/or a state of charge.

If the identified condition meets the at least one rule, the task notification is generated, which indicates that actions need to be taken to address the identified condition. For example, if the identified condition meets the at least one rule, this may mean that the fuel level is critical and that refueling is necessary. If the identified condition does not meet the at least one rule, the system 100 may continue to monitor the condition data without generating the task notification. In other words, the system 100 may remain in an idle state. For example, if the identified condition does not meet the at least one rule, this may mean that the fuel level is not yet critical and that no refueling is necessary.

In view of the above, the system 100 can continuously monitor the condition of the vehicles of the fleet and automatically identify problems and/or incidents and create task tickets. Such an end-2-end ticketing solution for managing vehicle fleets may consider the whole process chain from problem occurrence over problem identification, assessment of criticalities, assignment to responsible service personal and ticket execution to validation of problem resolution. Specifically, one integrated end-to-end system is provided which is simple and efficient, and which transparently connects customer needs and vehicle issues with service personal, who can fix the issues. The fleet management processes can be automated and it may be ensured that the whole process is optimized towards customer needs and that different processes aspects do not contradict each other. Further, the system provides transparency over vehicle issues (past, current and planned).

The vehicle 110 may include one or more sensors, such as at least one of a tire pressure sensor, a fuel tank level sensor, a state of charge sensor, and a fault detection sensor. For example, the one or more sensors can detect or monitor the vehicle's tires and report a flat tire and/or a too low tire pressure via the condition data.

The vehicle 110 may include communication means 114 (e.g., a communication device) configured to send the condition data from the vehicle 110 to the external managing means 120, and in particular the identification means 128. The vehicle 100 can send the condition data to the external managing means 120, and in particular the identification means 128, at regular intervals. The communication means 114 can be configured to transmit the condition data wirelessly, such as via a cellular network or Wi-Fi. The condition data may include further information, such as at least one of an identifier of the vehicle 110, a location of the vehicle 110, a time stamp, and the like. The reporting of the condition data can be conducted using "Check Control Messages".

The external managing means 120, and in particular the identification means 128, receives the condition data from the vehicle 110, for example, via a communication device 126 of the external managing means 120. The communication device 126 can be configured to receive the condition data directly from the vehicle 110 or via one or more intermediate process stations (not shown).

The identification means 128 can monitor a fuel level and/or a state of charge of a battery (e.g., in an electrically powered car) indicated in the condition data and generate the task notification if the fuel level or state of charge is below a predetermined threshold. In addition or alternatively, the identification means 128 can monitor various components of the car, such as electric components, and generate the task notification if a fault condition is identified.

In some implementations, the identified condition may include at least one of a tire pressure (or an indication that the tire pressure is below a predetermined threshold), a fuel level (or an indication that the fuel level is below a predetermined threshold), a state of charge (or an indication that the state of charge is below a predetermined threshold), and a fault condition (e.g., a broken battery, a problem with the electrical system, and the like). However, the present disclosure is not limited thereto and the identified condition may be based on one or more errors indicated by the condition data received from the vehicle 110.

The system 100, and in particular the external managing means 120, includes the rule database 122 which has one or more rules stored therein. In some embodiments, the rules may be configurable. In accordance with some embodiments, the external managing means 120 includes rule setting means (not shown) configured to receive a user input indicating a (new) rule or a change or configuration of an existing rule, wherein the rule setting means is further configured to include the (new) rule or the change or configuration of the existing rule in the rule database 122. In other words, the user may set, define, and/or change rules for particular tasks which are then automatically handled or used by the system 100. The rules can be set individually for each fleet of a plurality of fleets.

The one or more rules stored in the rule database 122 may define actions to be undertaken to address a particular issue, i.e., the identified condition, of the vehicle 110. The one or more rules allow to automatically process and arrange for a solution to the problem identified from the condition data, without human involvement. For example, the condition data may indicate a flat tire. A rule corresponding to "flat tire" may define actions to be undertaken to replace the tire. For instance, the rule may define a service provider or an on-site agent of the service provider to which the task can be assigned.

The notification device 124 may be configured to automatically provide the task notification to an external entity 130, such as a service provider, if the at least one identified condition meets the at least one rule. The task notification may include the identified condition and a task assignment to notify the service provider or an on-site agent of the service provider to fix the issue. In some embodiments, the external entity 130 may be a contact device of the service provider or the on-site agent of the service provider. The contact device may be a computer or server of the service provider (e.g., at a service center) and/or a mobile device (e.g., a smartphone, tablet, etc.) of the on-site agent of the service provider. The task notification may be generated automatically by the external managing means 120 based on the at least one rule and may be sent as a message from the external managing means 120 to the external entity 130, e.g., via the communication device 126.

In the above example, the task notification is provided to the external entity 130. However, the present disclosure is not limited thereto and the task notification can be provided to a user of the external managing means 120. For example, the external managing means 120 includes a user terminal. The user may be a fleet administrator of the operator of the fleet. The task notification may be provided at a user interface, such as a display, of the user terminal to notify the user about the identified condition of the vehicle 110. The user may then take proper action. This may be particularly beneficial in cases in which the identified condition is sensitive and should be brought to the user's attention.

If the at least one identified condition does not meet the at least one rule, the system 100 may continue to monitor the condition data without creating a task notification. In other words, the system 100 may remain in an idle state if the at least one identified condition does not meet the at least one rule.

According to some embodiments, the external managing means 120 is configured to receive a task completion notification from (e.g., the contact device of) the service provider, and in particular from (e.g., the contact device of) the on-site agent, or the vehicle 110. The task completion notification may indicate that the issue has been solved, e.g., that the flat tire has been replaced. The external managing means 120 may be configured to flag the task assignment as completed when the completion notification is received. In particular, the external managing means 120 may close the task ticket automatically. The rule database 122 may have one or more closing rules stored therein, which may define processes and actions for an automatic closing of the task ticket.

FIG. 2 shows a flow chart of a method 200 for managing a fleet of vehicles according to embodiments described herein. The method 200 can be implemented by the system described above.

The method 200 includes in block 210 identifying, at external managing means, a condition of a vehicle of the fleet based on condition data received from the vehicle; in block 220 determining, by external managing means, whether the identified condition meets at least one rule included in a rule database; and in block 230 providing, by the external managing means, a task notification if the at least one identified condition meets the at least one rule. If the identified condition does not meet the at least one rule, the method 200 may continue with block 210.

According to embodiments described herein, the method 200 for managing a fleet of vehicles can be conducted by means of computer programs, software, computer software products and the interrelated controllers, which can have a CPU, a memory, a user interface, and input and output means being in communication with the corresponding components of the system for managing a fleet of vehicles.

In particular, a computer-readable storage medium may include one or more programs for execution by one or more processors of the system, the one or more programs including instructions which, when executed by the one or more processors, cause the system to perform the method 200 for managing a fleet of vehicles according to the present disclosure.

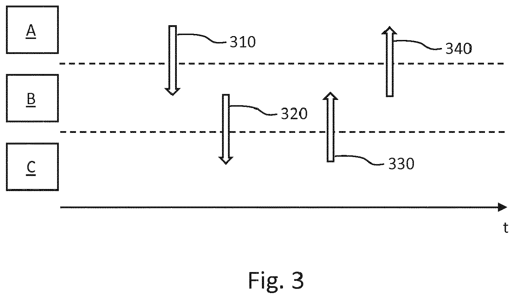

FIG. 3 illustrates a chronological sequence of a process for managing a fleet of vehicles according to further embodiments described herein.

First, a vehicle reports e.g. a flat tire or an empty fuel tank through a check control message (CCM). The check control message may be received at the backend A, where a fleet manager or fleet administrator B has set rules for automatic approving of the task. Arrow 310 indicates that the task is assigned to a service provider B. The service provider B may assign the task to an on-site agent C (arrow 320), who may for instance take a spare tire from a shop and replace the flat tire on the street.

According to some embodiments, the task can be manually closed by the fleet manager, the service provider or the on-site agent (indicated with arrows 330 and 340). Alternatively, the task can be closed automatically. For example, the condition data may indicate that the tire has been replaced or the vehicle has been refueled. The identified condition may then meet a rule "the tire has been replaced" of "full tank". Based thereon, the task ticket can be closed automatically.

The embodiments of the present disclosure can automatically identify problems and/or incidents in fleets and create tickets for the fleets. Such an end-2-end ticketing solution for managing vehicle fleets may consider the whole process chain from problem occurrence over problem identification, assessment of criticalities, assignment to responsible service personal and ticket execution to validation of problem resolution. Specifically, one integrated end-to-end system is provided which is simple and efficient, and which transparently connects customer needs and vehicle issues with service personal, who can fix the issues. The fleet management processes can be automated and it may be ensured that the whole process it optimized towards customer needs and that different processes aspects do not contradict each other. Further, the system provides transparency over vehicle issues (past, current and planned).

While the foregoing is directed to embodiments of the disclosure, other and further embodiments of the disclosure may be devised without departing from the basic scope thereof, and the scope thereof is determined by the claims that follow.

## Claims

1. A system (100) for managing a fleet of vehicles, comprising:
identification means (128) configured to identify a condition of a vehicle (110) of the fleet based on condition data received from the vehicle (110);
external managing means (120) configured to determine whether the identified condition meets at least one rule included in a rule database (122); and
notification means (124) configured to:
provide a task notification if the at least one identified condition meets the at least one rule.

2. The system (100) of claim 1, wherein the task notification includes the identified condition and a task assignment.

3. The system (100) of any one of the preceding claims, wherein the external managing means (120) is configured to provide the task notification to a service provider (130).

4. The system (100) of any one of the preceding claims, wherein the external managing means (120) is configured to receive a task completion notification from the vehicle (110) or the service provider (130).

5. The system (100) of claim 3, wherein the external managing means (120) is configured to flag the task notification as completed when the completion notification is received.

6. The system (100) of any one of the preceding claims, further comprising rule setting means configured to receive a user input indicating a new rule or a change of an existing rule, wherein the rule setting means is further configured to include the new rule or the change of the existing rule in the rule database (122).

7. The system (100) of any one of the preceding claims, wherein the identification means (122) is included in the external managing means (120).

8. The system (100) of any one of the preceding claims, wherein the external managing means (120) is a backend.

9. A method (200) for managing a fleet of vehicles, comprising:
identifying (210), at external managing means (120), a condition of a vehicle (110) of the fleet based on condition data received from the vehicle (110);
determining (220), by the external managing means (120), whether the identified condition meets at least one rule included in a rule database (122); and
providing (240, 242, 244), by the external managing means (120), a task notification if the at least one identified condition meets the at least one rule.

10. A computer-readable storage medium comprising one or more programs for execution by one or more processors (128) of a system (100), the one or more programs including instructions which, when executed by the one or more processors (128), cause the system (100) to perform the method (200) of claim 9.
